# EUROPEAN PATENT SPECIFICATION

(11) **EP 3 269 096 B1**
(45) Date of publication and mention of the grant of the patent: **09.10.2019**
(21) Application number: 15709899.7
(22) Date of filing: 11.03.2015
(51) Int. Cl.: H04L 12/58, H04L 12/701, H04L 12/715

(54) **TOPOLOGY DISCOVERY FOR AN APPLICATION LAYER MESSAGING PROTOCOL WITH HOP-BY-HOP ROUTING**
TOPOLOGIEENTDECKUNG FÜR EIN ANWENDUNGSSCHICHT-NACHRICHTENÜBERTRAGUNGSPROTOKOLL MIT HOP-BY-HOP-LEITWEGLENKUNG
DÉCOUVERTE DE TOPOLOGIE POUR UN PROTOCOLE DE MESSAGERIE DE COUCHE APPLICATION AU ROUTAGE SAUT PAR SAUT

(43) Date of publication of application: 17.01.2018
(73) Proprietor: Telefonaktiebolaget LM Ericsson (publ), 164 83 Stockholm (SE)
(72) Inventor: ESSIGMANN, Kurt, 52072 Aachen (DE)
(74) Representative: Ericsson
(86) International application number: PCT/EP2015/055066
(87) International publication number: WO 2016/141985

(56) References cited:
- US-A1- 2011 314 178
- US-A1- 2013 173 823
- US-B1- 6 584 093
- Anonymous: "Open Shortest Path First - Wikipedia, the free encyclopedia", , 10 March 2015 (2015-03-10), XP055209845, Retrieved from the Internet: URL:https://en.wikipedia.org/w/index.php?t itle=Open_Shortest_Path_First&oldid=650736 272 [retrieved on 2015-08-27]

## Description

### Technical Field

The present disclosure generally relates to messaging protocols for communication between two or more network elements. Specifically, the disclosure pertains to aspects of application layer messaging protocols that use hop-by-hop routing.

### Background

Communication networks are ubiquitous in our connected world. Many larger communication networks comprise a plurality of interconnected network domains. In an exemplary mobile communication scenario, such network domains can be represented by a home network of a roaming subscriber terminal on the one hand and a network visited by the roaming subscriber terminal on the other.

Message exchanges between network elements located in different network domains are often based on a session concept. There exist various messaging protocols suitable for the exchange of session-based messages between different network domains. In the above example of message exchanges between network elements of a visited network and a home network, or in other examples, the Diameter protocol is often used. The Diameter protocol is an application layer messaging protocol that provides an Authentication, Authorization and Accounting (AAA) framework for network operators.

In the Diameter protocol, information is exchanged on the basis of request and answer messages. A Diameter message typically identifies the network element originating the message and its location in a first network domain (e.g., a client in a visited network) and the message destination with its location in a second network domain (e.g., a server in a home network). The identities of the network elements acting as message originator and message destination are indicated by Fully Qualified Domain Names (FQDNs). Their respective network location is indicated by their realm (i.e., the administrative network domain where an individual subscriber terminal maintains an account relationship or receives a particular service).

In the Diameter protocol messages are routed on a hop-by-hop basis. To this end, each Diameter server, Diameter client or intermediate Diameter agent (also called proxy) maintains a routing table that associates each directly reachable, or adjacent, peer ("next hop") with a message destination potentially reachable via that peer. The routing of a request message, for example, is performed on the basis of its destination realm as included in the form of an Address Value Pair (AVP) in the message header. A look-up operation in the routing table will yield for a given destination realm the associated next hop to which the message is to be forwarded. In case a particular destination realm is associated with multiple hops in the routing table, a load balancing scheme may be applied to reach the final the routing decision.

It has been found that the routing mechanism currently implemented in the Diameter protocol has several drawbacks. For example, in many scenarios (e.g., a time-out or receipt of an answer message with an error code) a proper routing decision can no longer be made based on the information derivable from a routing table. In such scenarios, a given messaging transaction cannot be successfully completed. Moreover, a request message may be re-transmitted by a client or agent once. However, if all agents or clients of a large Diameter-enabled network would each perform such a re-transmission, this can easily lead to an unwanted message flooding of the network.

It will be evident that the above drawbacks are not specific to the Diameter protocol or the roaming scenario exemplarily described above. Similar problems also occur in other routing-based messaging protocols other messaging scenarios.

Document US 6,584,093 B1 may be construed to disclose a method and apparatus for inter-domain routing of calls in a network, where the network represents a first wide area network. A routing node of the network advertises its access to a range of addresses in a second wide area network and a cost for access to the range of addresses to all adjacent nodes in the network. Each of the adjacent nodes inserts an entry in its own routing table associating access to the range of addresses in the second wide area network with the network address of the routing node and the cost for access. Each adjacent node then modifies the cost for access by adding its own cost and advertises its access to the range of addresses in the second wide area network and the modified cost for access to all of its adjacent nodes. When a call addressed to a destination address in the range of address in the second wide area network is received at each node of the network, then the node searches for the entry in its routing table corresponding to the range of addresses in the second wide area network having the lowest cost for access and connects the call to the adjacent node associated with the entry having the lowest cost. The routing node can also advertise one or more protocol types which it can support, where the protocol types are associated with the routing node in the routing table in each adjacent node and a call having a given protocol type is also routed at each node of the network based upon its protocol type.

Document US 2013/173823 A1 may be construed to disclose a method and related network node including one or more of the following: receiving a message at the network device; constructing a route key based on the message, wherein the route key comprises at least one value carried by the message; determining whether the network device stores a previous route record associated with the route key; and if the network device does not store a previous route record associated with the route key, generating a new route record based on the route key, and provisioning a new route based on the new route record into a routing table of the network device.

### Summary

Accordingly, there is a need for a solution that avoids one or more of the drawbacks set forth above, or other drawbacks, associated with application layer messaging protocols that use hop-by-hop routing.

According to the disclosure, there are provided methods, apparatuses, a computer program product and a computer-readable medium according to the independent claims. Developments are set forth in the dependent claims.

According to a first aspect, a network element configured to implement an application layer messaging protocol that uses hop-by-hop routing is provided. The network element comprises a memory in which a routing table is stored, wherein the routing table includes one or more table entries, each table entry associating a hop supported by the network element with a message destination potentially reachable via that hop. The network element further comprises at least one processor configured to determine topological information about a local logical topography of
the network element, and to trigger transmission of the topological information to the hops defined in the routing table.

The hops in the routing table may be defined by directly reachable, or neighbouring, network elements. The hops in the routing table may not include any message destinations. In certain variants, the triggering step may result in transmission of the topological information to all the hops defined in the routing table.

The local logical topology for which topological information is determined may comprise one or more message destinations directly reachable via the network element. As such, the network element may be the "last hop" on the route from a particular message originator to a particular message destination. The one or more message destinations directly reachable via the network element may be determined by the network element in various ways. As an example, such message destinations may be determined upon connection establishment between each of the directly reachable message destinations and the network element.

A message destination may be indicated in a header field of a message that needs to be routed. In one implementation, the message destination may be a particular server (e.g., as defined by a particular FQDN). In a further implementation, the message destination may be an individual network domain (e.g., as defined by a particular realm hosting one or more individual servers). Both implementations can be combined. Certain application layer messaging protocols that may be used by the network element, such as the Diameter protocol, define a message format in which the message destination is indicated by the identity of an individual server in combination with the realm in which the server is located.

A message destination identity may comprise a prefix portion and a suffix portion. In certain variants, the prefix portion and the suffix portion may correspond to different network domain levels, wherein the prefix portion defines a sub-domain of the suffix portion. Some protocols, such as Diameter, refer to the different domain levels corresponding to the prefix portion and the suffix portion as realms. In this case, the suffix portion may correspond to a root realm, and the prefix portion may be indicative of a particular network element ("origin realm") within the root realm.

The topological information determined about the local logical topography of the network element may take various forms. As an example, the topological information may be indicative of identities of one or more message destinations directly reachable from the network element. Such message destination identities may be indicative of the identity of a particular server (e.g., its FQDN), the identity of a particular network domain hosting a group of one or more individual servers (e.g., a realm), or a combination thereof. In addition, or as an alternative, the topological information could be indicative of capabilities of one or more message destinations directly reachable from the network element. As an example, such capabilities may relate to applications or services supported by the respective message destinations. Additionally, or in the alternative, the topological information may be indicative of transmission capacities (e.g., in terms of a transmission bandwidth) towards one or more message destinations directly reachable from the network element. Alternatively, or in addition, the topological information may be indicative of overload conditions towards one or more message destinations directly reachable from the network element.

The network element may further comprise an interface configured to transmit the topological information. The interface may take the form of a hardware interface, a software interface, and/or a combination thereof.

The processor may be configured to trigger transmission of the topological information during a connection set-up phase. The connection set-up may pertain to one, more or all of the next hops and/or directly reachable message destinations of the network element.

Alternatively, or in addition, the processor may be configured to trigger transmission of the topological information upon a particular network condition change, such as a configuration change, a connection change or a load condition change. The corresponding change may pertain to at least one of the network element itself, any hop supported by the network element and any message destination directly reachable from the network element. The network condition change may be the result of a network failure, a manual re-configuration, or both.

According to a further aspect, a network element configured to implement an application layer messaging protocol that uses hop-by-hop routing is provided. The network element comprises a memory in which a routing table is stored, wherein the routing table includes one or more table entries, each table entry associating a hop supported by the network element with a message destination potentially reachable via that hop. The network element further comprises an interface configured to receive topological information indicative of a local logical topography of a particular one of the hops in the routing table and at least one processor having access to the memory, wherein the processor is configured to modify the routing table based on the received topological information.

The processor may be configured to control message routing on the basis of the modified routing table. Message routing may be controlled by the processor taking into account one or more of the following items of topological information: identities of one or more message destinations directly reachable from the particular hop; capabilities of one or more message destinations directly reachable from the particular hop; transmission capacities towards one or more message destinations directly reachable from the particular hop; and overload conditions of one or more message destinations directly reachable from the particular hop.

Modification of the routing table may include one or more of creating a new table entry, deleting an existing table entry, and modifying an existing table entry. As such, the processor may be configured to modify the routing table by storing the received topological information in a table entry for a particular hop. Additionally, or in the alternative, the processor may be configured to modify the routing table by deleting a table entry for a particular hop.

In all of the network element aspects presented herein, the topological information may be included in a dedicated data field of a regular message of the messaging protocol. The dedicated data field may be located in a message header. In certain variants, a format of the dedicated data field may take the form of an AVP. In case the messaging protocol implements a request/answer-based messaging scheme, the regular message may be one or a request message and an answer message.

The messaging protocol may be session-based. A subscriber session may comprise one or multiple messaging transactions, such as the exchange of request and answer messages. The subscriber session may have been set up for a subscriber terminal. The subscriber terminal may be associated with a particular subscription uniquely identified by a subscriber identifier.

In one variant, the application layer messaging protocol is the Diameter protocol. In another variant, the application layer messaging protocol is the Radius protocol. In all of those variants, or in other variants, the network element may assume the role of one of an agent (or proxy), a client and a server.

Also provided is a network system comprising the network element triggering transmission of the topological information and the network element receiving the topological information. The network system may comprise one or more dedicated network domains, such as a first network domain and a second network domain. One or both of the first network domain and the second network domain may be a closed domain such as a domain associated with a specific Internet Service Provider (ISP) or mobile network operator. The methods and method aspects presented herein may be performed by one or more network elements located within or interfacing a particular network domain (e.g., one of the first network domain and the second network domain).

The network elements may be comprised by a mobility management system or a charging system. In one example the subscriber session is a mobility management session for a subscriber terminal. In such a case the originating network domain may belong to a home network and the destination network domain may belong to a visited network from the perspective of the subscriber terminal, or vice versa. In other cases the subscriber session may be a charging session (e.g., for a specific subscription or subscriber terminal). The charging session may take place for off-line or with on-line charging.

Also provided is a method of operation a network element configured to implement an application layer messaging protocol that uses hop-by-hop routing based on a routing table including one or more table entries, each table entry associating a hop supported by the network element with a message destination potentially reachable via that hop. The method comprises determining topological information about a local logical topography of the network element and triggering transmission of the topological information to the hops defined in the routing table.

According to a still further aspect, a method of operating a network element configured to implement an application layer messaging protocol that uses hop-by-hop routing based on a routing table including one or more table entries is provided, each table entry associating a hop supported by the network element with a message destination potentially reachable via that hop, wherein the method comprises receiving topological information indicative of a local logical topography of a particular one of the hops in the routing table and modifying the routing table based on the received topological information.

The methods may be performed by an agent located at a border between a first network domain and a second network domain. As an example, the agent may be located in a first network domain and interface a second network domain. Alternatively, the method may be performed by an agent located at a border between a first network domain and an intermediate network domain that connects to a second network domain. As an example, the agent may be located in the first network domain and interface the intermediate network domain. The methods may also be performed by a client or a server located in a particular network domain.

Also provided is a computer program product comprising program code portions to perform the steps of any of the methods presented herein when the computer program product is executed by one or more computing devices (e.g., processors). The computer program product may be stored on a computer-readable recording medium such as a semiconductor memory, hard-disk or optical disk. Also, the computer program product may be provided for download via a communication network.

### Brief Description of the Drawings

Further aspects, details and advantages of the present disclosure will become apparent from the following description of exemplary embodiments and the drawings, wherein:
- Fig. 1: illustrates a schematic diagram of a network system with network elements according to embodiments of the present disclosure;
- Figs. 2A: illustrate flow diagrams of two method embodiments of the present
- and 2B: disclosure;
- Fig. 3: illustrates another network system with further embodiments of network elements;
- Fig. 4: illustrates signalling diagrams in accordance with embodiments of the present disclosure;
- Figs. 5A to 5C: illustrate embodiments of routing table modifications; and
- Fig. 6: illustrates a schematic diagram of a further system embodiment.

### Detailed Description

In the following description, for purposes of explanation and not limitation, specific details are set forth, such as specific network domains, protocols, and so on, in order to provide a thorough understanding of the present disclosure. It will be apparent to one skilled in the art that the present disclosure may be practiced in embodiments depart from these specific details. For example, while some of the following embodiments will be described in the exemplary context of the Diameter protocol, it will be apparent that the present disclosure could also be implemented using other application layer messaging protocols that use hop-by-hop routing. Moreover, while the present disclosure will partially be described in an exemplary roaming scenario, the present disclosure may also be implemented in connection with other communication scenarios (e.g., charging sessions).

Those skilled in the art will further appreciate that the methods, services, functions and steps explained herein below may be implemented using individual hardware circuitry, using software in conjunction with a programmed microprocessor or general purpose computer, using an Application Specific Integrated Circuit (ASIC) and/or using one or more Digital Signal Processors (DSPs). It will also be appreciated that the present disclosure could be implemented in connection with one or more processors and a memory coupled to the one or more processors, wherein the memory is encoded with one or more programs that cause the at least one processor to perform the methods, services, functions and steps disclosed herein when executed by the processor.

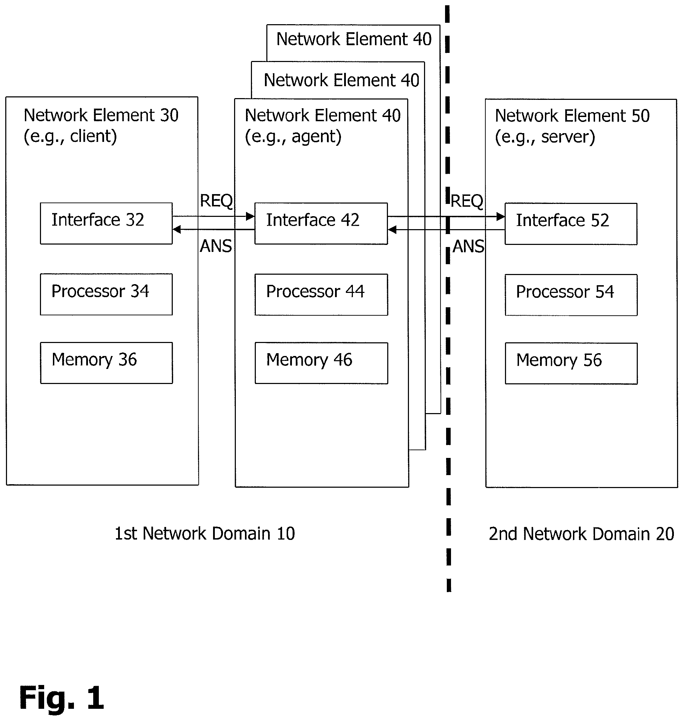

Fig. 1 illustrates an embodiment of a network system comprising a first network domain 10 and a second network domain 20. As an example, the first network domain 10 can be a visited network domain while the second network domain 20 is a home network domain from the perspective of a roaming subscriber terminal. Each of the two network domains 10, 20 can be a closed domain operated, for example, by a specific ISP or mobile network operator.

In the exemplary scenario illustrated in Fig. 1, two or more network elements 30, 40 are located in the first network domain 10 while at least one further network element 50 is located in the second network domain 20. The network element 30 in the first network domain 10 and the network element 50 in the second network domain 20 may have a client/server relationship in accordance with a dedicated application layer messaging protocol, such as Diameter or Radius. Each of the network elements 30, 50 may be operated as one or both of a client or server depending on its current role in a messaging transaction.

The at least one intermediary network element 40 is configured to act as an agent between the network element 30 in the first network domain 10 and the network element 50 in the second network domain 20. It should be noted that one or more further network elements, in particular agents, may operatively be located between the network element 30 and the network element 40 in the first network domain 10. Moreover, one or more further network elements, in particular agents, and, optionally, network domains may operatively be located between the network element 40 in the first network domain 10 and the network element 50 in the second network domain 20. In other embodiments, the network element 40 could be located in the second network domain 20 or in any intermediate network domain (not shown) between the first network domain 10 and the second network domain 20.

Each of the network elements 30, 40, 50 comprises at least one interface 32, 42, 52 and at least one processor 34, 44, 54. Further, each network element 30, 40, 50 comprises a memory 36, 46, 56 for storing program code to control the operation of the respective processor 34, 44, 54 and for storing data. The data may take the form of a routing table with one or more table entries as will be explained in greater detail below.

The interfaces 32, 43, 52 are generally configured to receive and transmit messages from and/or to other network elements. As illustrated in Fig. 1, an exemplary messaging transaction may comprise the transmission of a request message from the network element 30 to the network element 40 or, via the network element 40, to the network element 50. The network element 40 or the network element 50 may respond to that request message from the network element 30 with an answer message. It will be appreciated that the present disclosure is not limited to the exemplary request/answer messaging process illustrated in Fig. 1.

The present disclosure, in certain embodiments, permits the network elements 30, 40, 50 (i.e., clients, servers and agents) to perform better informed routing decisions that avoid unnecessary message re-transmissions. Better informed routing decisions also help to speed-up service execution, such as receipt of a final answer message at the network element 30 responsive to a request message directed to the network element 40 or the network element 50.

In certain embodiments of the present disclosure, the routing decisions are improved by providing the network elements 30, 40 and 50 with topological information beyond their respective next peers. As an example, such topological information may include one or more of supported network domains, whether or not the next peers have one or more direct server connections, local routing capabilities, local connection states, and so on. The corresponding topological information received from the connected peers may be utilized in connection with routing decisions and associated re-transmission decisions for failing transactions. As a result, network signalling traffic can be reduced. Also, manual network element re-configurations can be avoided. Still further, signalling loops, and thus service degradation from the perspective of subscribers, can be prevented. Still further, overload control mechanisms can be enhanced.

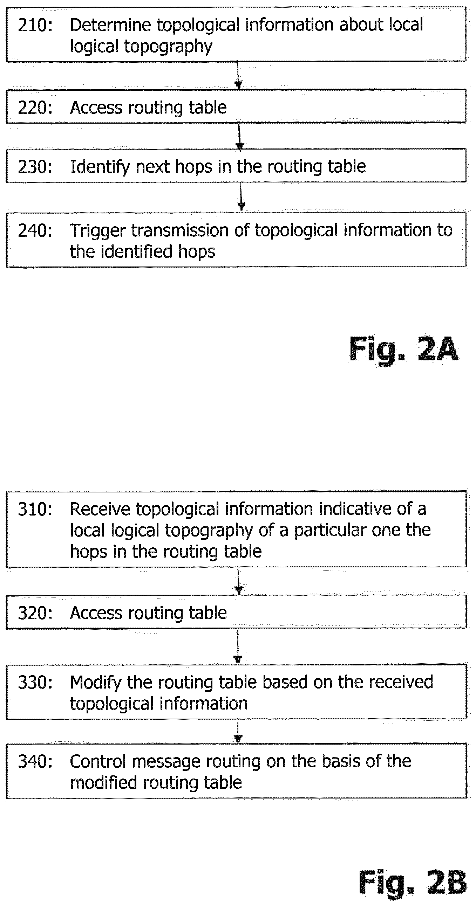

Figs. 2A and 2B illustrate flow diagrams of exemplary method embodiments. The method embodiments will exemplarily be described with reference to one of the network elements 40 (i.e., agent) and the network system of Fig. 1. It will be appreciated that the method embodiments could also be performed using any other network element.

The method embodiments illustrated in Figs. 2A and 2B can be performed in connection with a subscriber session for a dedicated subscriber terminal (not shown in Fig. 1). The subscriber session may be a mobility management session, a charging session, or any other session for a dedicated subscriber terminal.

In a first step 210, the processor 44 of the network element 40 determines topological information about its local logical topography. The local logical topography of the network element 40 in particular comprises other network elements directly reachable by the network element 40 and the links to those network elements. In one implementation, the local logical topography specifically comprises message destinations (e.g., the network domain 20 and/or the network element 50 acting as server in the network domain 20) having a direct connection to the network element 40.

The topological information determined in step 210 can relate to one or more topological items of information, such as the identities of the one or more network domains and/or the one or more serving network elements directly reachable from the network element 40 (i.e., network domain 20 and network element 50 in the scenario of Fig. 1). The identity of the network domain and/or the serving network element may be indicated via its FQDN, or otherwise.

The topological information determined in step 210 may also comprise information indicative of capabilities of one or more message destinations (e.g., serving network domain(s) and/or serving network element(s)) directly reachable from the network element 40. Such capabilities may relate to services provided by or applications allowed for particular message destinations.

In a further variant, the topological information determined in step 210 may be indicative of transmission capacities towards one or more message destinations (e.g., serving network domain(s) and/or serving network element(s)) directly reachable from the network element 40. As an example, the actually provided or the theoretically configured transmission capacities of links towards an individual domain, an individual serving network element or an individual application supported by the network domain or serving network element may be determined.

In a still further variant, the topological information determined in step 210 is indicative of overload conditions towards one or more message destinations (e.g., serving network domain(s) and/or serving network element(s)) directly reachable from the network element 40. Such overload conditions may relate to links between the network element 40 and the one or more message destinations or to the processing capacities of the one or more message destinations.

In a next step 220, the processor 44 of the network element 40 accesses a routing table stored in the memory 46. The routing table typically includes multiple table entries with each table entry associating a hop supported by the network element 40 with a message destination potentially reachable via that hop. As an example, a further network element assuming the role of an agent may be directly connected to the network element 40 on a route to the serving network element 50. This further network element will then be supported by the network element 40 for message routing towards the serving network element 50. A table entry in the routing table will thus associate the identity of this further network element with the identity of the serving network element 50 or the identity of the serving network domain 20 hosting the network element 50. The network element 40 assumes that the second network domain 20 or the network element 50 is "potentially" reachable via that next hop as the network element 40 has no positive knowledge about, for example, the link state between that hop and the message destination.

After having accessed the routing table in step 220, the content of the routing table is analysed by the processor 44 to identify the individual next hops for which an entry is stored in the routing table (step 230). In a further step, the processor 44 triggers transmission of the topological information determined in step 210 to all the next hops identified in step 230, or to a subset thereof. The transmission of the topological information is performed via the interface 42 of the network element 40.

The topological information may be transmitted in a regular message (e.g., in a request message or an answer message) or in a dedicated topology discovery message. The topological information may be transmitted as an AVP (e.g., AVP *network_topology*)*,* or otherwise. The AVP may a grouped AVP.

In one variant the topological information is transmitted in a new data field (e.g., of a message header). The new data field may be optional in that it is only included in a regular message in case topological information is actually to be transmitted. In the exemplary request/answer-based messaging scheme illustrated in Fig. 1, the new data field may be included in any answer message exchange during connection set-up or in any answer message that is sent as a response to a request message sent by a peer client or a peer agent. Between directly mated peers the topological information may also be exchanged by request and answer messages at any time. In particular, the network element 40 may trigger transmission of topological information upon a network condition change (e.g., a configuration change, a connection change or a local condition change). The network condition change may pertain to one or more of the network elements 40 itself, any hop supported by the network element 40 (e.g., serving as defined in its routing table) and any message destination (e.g., network domain(s) and/or serving network element(s)) directly reachable from the network element 40. A network condition change may, for example, be the result of a manual re-configuration or a network failure (in such a case the network topology as such may change).

The steps 210 to 240 illustrated in Fig. 2A, and in particular step 240, may be performed in regular time intervals (e.g., repeatedly after a predefined number of minutes) or on a statistical basis. The steps may separately be performed in case a network condition change is detected.

Fig. 2B illustrates the operation of a network element 40, or any other network element, upon receipt of topological information (e.g., as sent in step 240 of Fig. 2A). The network element 40 performing the steps illustrated in Fig. 2B will be a peer, or a next hop, of the network element that performed the operations illustrated in Fig. 2A.

In a first step 310, the topological information is received via the corresponding interface 42 of the network element 40. In a further step 320, the processor 44 of the network element 40 accesses a routing table as stored in the memory 46.

Then, in step 330, the processor 44 modifies the accessed routing table based on the topological information received in step 310. As an example, the received topological information, or portions thereof, may be stored in an existing or new table entry for the particular network element (i.e., hop) from which the topological information has been received in step 310. Alternatively, the processor 44 may modify the routing table accessed in step 320 by deleting a table entry for the particular network element from which the topological information has been received. Of course, there exist many further variants how the routing table may be modified in step 330 based on the received topological information, and some examples will be discussed in more detail below.

After modification of the routing table in step 330, the network element 40 performs, in step 340, message routing control on the basis of the modified routing table. As such, the topological information received in step 310 can be taken into account by the network element 40 to arrive at better informed routing decisions that avoid the drawbacks of the prior art.

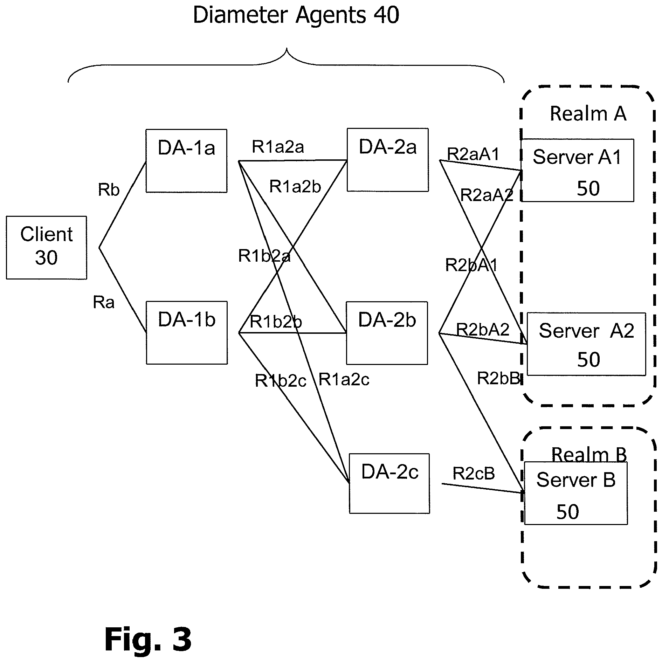

Fig. 3 illustrates an embodiment of a network system configured to implement the Diameter protocol. It will be appreciated that the Diameter protocol is only used for illustrative purposes herein and that alternative application layer messaging protocols that use hop-by-hop routing may be implemented as well. The same reference numerals as in the preceding embodiments will be used to denote the same or similar components.

The network system illustrated in Fig. 3 comprises a Diameter client 30 and a plurality of Diameter agents 40 located within one and the same or within different network domains (also denoted as realms in the Diameter protocol). Two further network domains (realm A and realm B) comprise Diameter servers A1, A2 and B, respectively. From the perspective of client 30, realm A and realm B as well as the servers 50 included therein constitute message destinations. Each of the agents 2a, 2b and 2c in Fig. 3 can directly reach a subset of the message destinations. For example, agent 2a can directly reach server A1 and server A2 in realm A, agent 2b can directly reach server A1 and server A2 in realm A as well as server B in realm B, and agent 2c can directly reach server B in realm B.

In Fig. 3, the links between two network elements are denoted by the letter R followed by the two link endpoints. For example, the link between agent 2b and server A2 is denoted "R2bA2". The corresponding links, or routes, may be entered into the routing table of the respective agent 40 as supported hops.

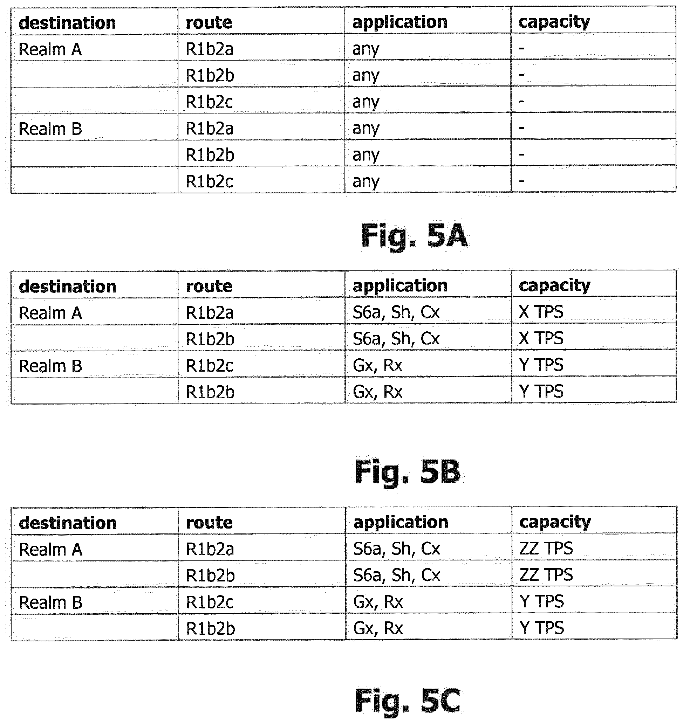

Without having access to any topological information beyond its direct peers, the routing table of agent 1b may look as illustrated in Fig. 5A. As shown in Fig. 5A, the routing table comprises six entries, wherein agent 1b assumes that realm A and realm B can each be reached via each of its next hops (i.e., agent 2a, agent 2b, and agent 2c). The "un-informed" routing table illustrated in Fig. 5A may lead to agent 1b routing a message for a server in realm A to agent 2c although agent 2c, has no link to realm A. To avoid such un-informed routing decisions and the associated drawbacks discussed above, the topology discovery procedure discussed herein (see, e.g., Figs. 2A and 2B) will be initiated.

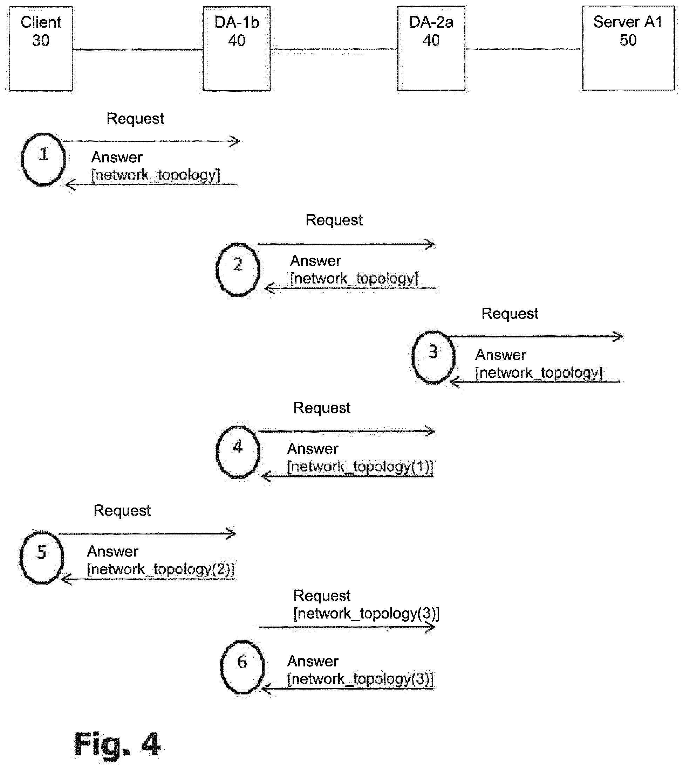

An exemplary topology discovery procedure for the network scenario illustrated in Fig. 4 could start with an exchange of topological information between agent 1b and client 30 so as to reveal to the client 30 the current topological information available to agent 1b (e.g., via the process shown in Fig. 2A). Similar exchanges of topological information between agent 1b and agent 2a (as well as between agent 1b and each of agents 2b and 2c not illustrated in Fig. 4) will reveal to agent 1b the topological information available to agent 2a (as well as agents 2b and 2c). Agent 1b may thus learn that agent 2c has no direct link to realm A and that agent 2a has no direct link to realm B. As such, the table entries associating agent 2a with realm B and agent 2c with realm A can be deleted in the routing table of agent 1b, as shown in Fig. 5B.

The exchange of topological information between each of agent 2a, 2b and 2c and the respectively directly connected servers 50 (only illustrated for agent 2a in Fig. 4) may reveal the applications or services supported by the respective servers 50 as well as the link capacities towards the respective servers 50. A corresponding topological information update will then be sent by agents 2a, 2b and 2c to the agents 1a and 1b (as illustrated for agents 1b and 2a in Fig. 4). Based on the information received from agents 2a, 2b and 2c, agent 1b may thus supplement the routing table with the applications supported by and capacities available to each realm and per route (i.e., per next hop). The updated routing table that results is illustrated in Fig. 5B (see the two columns "application" and "capacity").

As shown in Fig. 4, a corresponding update on the topological information may then also be sent from agent 1b to client 30. As further shown in Fig. 4, the exchange of topological information may also be performed between mated pairs of agents, such as agents 1b and 1a, when they determine by configuration that they act as a mated pair (as defined in the Diameter protocol).

In certain situations, agents 2a and 2b may detect an overload condition in relation to realm A. Responsive to that detection, agents 2a and 2b will trigger a transmission of updated topological information to their peers (e.g., agents 1a and 1b). Agents 1a and 1b will then update their routing table accordingly as illustrated for agent 1b in Fig. 5C. In Figs. 5A, 5B and 5C, the capacity is exemplarily indicated by Transactions per seconds (TPS), wherein ZZ<X. Based on the updated routing table, agent 1b may throttle traffic from client 30 towards realm A and, thus, as close to the traffic source as possible. Agent 1b may further indicate congestion of realm A to client 30, so that client 30 can also initiate traffic throttling itself (if this function is supported).

An agent 40 can generally indicate to its peers (e.g., to all of its directly connected neighbours or at least to the hops in its routing table) an overload condition when the agent 40 determines that only the agent 40 itself and, optionally, its mate in a mated pair serve a particular network domain. In the scenario illustrated in Fig. 3, agents 2a and 2b may thus detect an overload condition when all servers 50 in realm A indicate an overload condition to agents 2a and 2b and when agents 2a and 2b have exchanged these conditions between each other and have found matching conditions per realm A (e.g., they serve the same servers 50 and each indicates overload consistently for a certain period of time or a certain number of messages).

Agents 2a and 2b may then indicate to agents 1a and 1b that realm A is overloaded and can request traffic reduction (e.g., along the lines of the Internet Engineering Task Force, IETF, document pertaining to Diameter Overload Indication Conveyance, DOIC). As such, a Diameter agent may negotiate realm overload conditions via a negotiation with its mate and signal the overload conditions to its Diameter peers (e.g., its supported hops). An agent may overwrite a realm overload condition signalled by a peer if it has direct connectivity to that same realm and the corresponding connection is not overloaded.

As a fall-back position, a Diameter agent may refer to a default routing table (e.g., as illustrated in Fig. 5A for agent 1b) when no topological information is received for a predefined period of time or a predefined number (e.g., answer) messages.

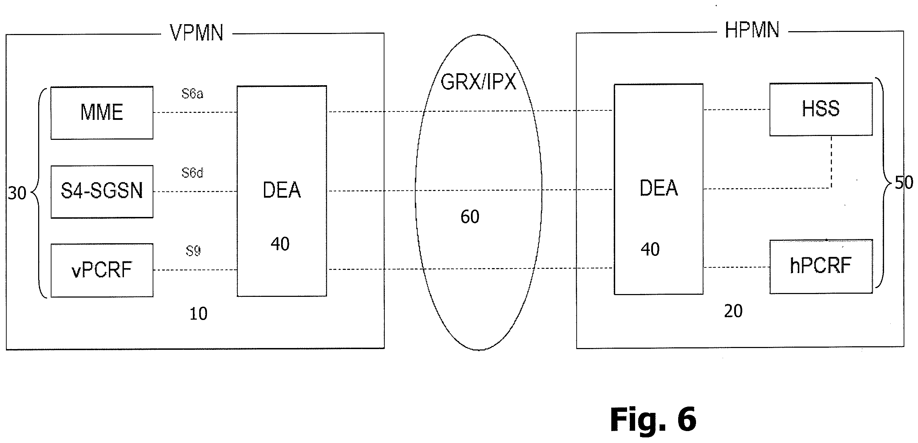

Fig. 6 illustrates a more detailed embodiment of an exemplary network system in which the present disclosure can be implemented. The same reference numerals as in Fig. 1 are used to denote the same or similar components.

Fig. 6 schematically illustrates a network architecture for implementing a Diameter-based roaming scenario in connection with a Visited Public Mobile Network (VPMN) as a first network domain 10 and a Home Public Mobile Network (HPMN) as a second network domain 20. The two network domains 10, 20 are interconnected by an intermediate network domain 60 denoted as GRX/IPX (see, e.g., GSM Association Official Document IR.88-LTE Roaming Guidelines Version 9.0, 24 January 2013).

The VPMN 10 comprises multiple network elements 30 attached to an agent in the form of a Diameter Edge Agent (DEA) 40. The VPMN network elements 30 in the embodiment of Fig. 6 take the form of a Mobility Management Entity (MME), an S4 Serving GPRS Support Node (S4-SGSN) and a visited Policy and Charging Rules Function (vPCRF) connected via S6a, S6d and S9 interfaces to respective interfaces of the DEA 40 (see reference numeral 42 in Fig. 1). In a similar manner, the HPMN 20 comprises a DEA 40 having the same function as the DEA 40 of the VPMN 10. Furthermore, the HPMN 20 comprises two network elements 50 in the form of a Home Subscriber Server (HSS) and a home PCRF (hPCRF, respectively). It will be appreciated that in addition to the two DEAs 40 illustrated in Fig. 6, one or more non-edge agents 40 may be present.

The determination, transmission, reception and processing of topological information discussed above with reference to Figs. 1 to 5C may be implemented in connection with the particular network elements illustrated in Fig. 6.

In the Diameter-based embodiments presented herein, the processing of messages will be based on information included in dedicated message fields, (AVPs)). Details in this regard, and in regard of the Diameter protocol in general in terms of the present embodiments, are described in the Internet Engineering Task Force (IETF) Request for Comments (RFC) 6733 of October 2002 (ISSN: 2070-1721).

While the present invention has been described in relation to exemplary embodiments, it is to be understood that the present disclosure is for illustrative purposes only. Accordingly, it is intended that the invention be limited only by the scope of the claims appended hereto.

## Claims

1. A network element (30, 40, 50) configured to implement an application layer messaging protocol that uses hop-by-hop routing, the network element comprising
a memory (36, 46, 56) in which a routing table is stored, the routing table including one or more table entries, each table entry associating a hop supported by the network element with a message destination (20, 50) potentially reachable via that hop, wherein i) the supported hop has one of a link and a route to a peer of the network element and ii) potentially reachable via that next hop means that the network element has no positive knowledge about a link state between that hop and the message destination, and wherein the routing table comprises table entries under the assumption that the message destination can be reached via each of the next hops of the network element;
an interface (32, 42, 52) configured to receive (310) topological information indicative of a local logical topography of a particular one of the hops in the routing table, wherein the local logical topography comprises other network elements directly reachable by the particular one the hops and the links to those network elements; and
at least one processor (34, 44, 54) having access (320) to the memory, the processor being configured to modify (330) the routing table based on the received topological information, wherein, the processor is further configured to modify the routing table by deleting a table entry for the particular hop if the received topology information indicates that the particular hop has no direct link to the message destination.

2. The network element of claim 1, wherein
the processor is configured to control message routing (340) on the basis of the modified routing table.

3. The network element of claim 2, wherein
the processor is configured to control message routing taking into account one or more of the following items of topological information:
- identities of one or more message destinations directly reachable from the particular hop;
- capabilities of one or more message destinations directly reachable from the particular hop;
- transmission capacities towards one or more message destinations directly reachable from the particular hop; and
- overload conditions of one or more message destinations directly reachable from the particular hop.

4. The network element of any of the preceding claims, wherein:
- the topological information is included in a dedicated data field of a regular message of the messaging protocol; and/or
- the messaging protocol implements a request/answer-based messaging scheme; and/or
- the messaging protocol is one of the Radius protocol and the Diameter protocol; and/or
- the network element assumes the role of one of an agent (40), a client (30) and a server (50) in accordance with the messaging protocol.

5. A method of operating a network element (30, 40, 50) configured to implement an application layer messaging protocol that uses hop-by-hop routing based on a routing table including one or more table entries, each table entry associating a hop supported by the network element with a message destination (20, 50) potentially reachable via that hop, wherein i) the supported hop has one of a link and a route to a peer of the network element and ii) potentially reachable via that next hop means that the network element has no positive knowledge about a link state between that hop and the message destination, and wherein the routing table comprises table entries under the assumption that the message destination can be reached via each of the next hops of the network element, the method comprising
receiving (310) topological information indicative of a local logical topography of a particular one the hops in the routing table, wherein the local logical topography comprises other network elements directly reachable by the particular one the hops and the links to those network elements; and
modifying (330) the routing table based on the received topological information, wherein, the processor is further configured to modify the routing table by deleting a table entry for the particular hop if the received topology information indicates that the particular hop has no direct link to the message destination.

6. A computer program product comprising program code portions to perform the steps of claim 5 when the computer program product is executed on one or more computing devices.

7. A computer-readable recording medium storing the computer program product of claim 6.

## Patentansprüche

1. Netzwerkelement (30, 40, 50), das zum Implementieren eines Nachrichtenübertragungsprotokolls der Anwendungsschicht ausgelegt ist, das hopweise Leitweglenkung verwendet, wobei das Netzwerkelement umfasst:
einen Speicher (36, 46, 56), in welchem eine Leitwegtabelle gespeichert ist, wobei die Leitwegtabelle einen oder mehrere Tabelleneinträge umfasst, jeder Tabelleneintrag einen Hop, der vom Netzwerkelement unterstützt wird, mit einem Nachrichtenziel (20, 50) assoziiert, das potenziell über diesen Hop erreichbar ist, wobei i) der unterstützte Hop eines von einer Verbindungsstrecke und einem Leitweg zu einem Partner des Netzwerkelements aufweist, und ii) potenziell über diesen Hop erreichbar bedeutet, dass das Netzwerkelement keine positive Kenntnis über einen Verbindungsstreckenzustand zwischen diesem Hop und dem Nachrichtenziel hat, und wobei die Leitwegtabelle Tabelleneinträge in der Annahme umfasst, dass das Nachrichtenziel über jeden der nächsten Hops des Netzwerkelements erreicht werden kann;
eine Schnittstelle (32, 42, 52), die so ausgelegt ist, dass sie topologische Informationen empfängt (310), die eine lokale logische Topografie eines jeweiligen der Hops in der Leitwegtabelle anzeigen, wobei die lokale logische Topografie andere Netzwerkelemente, die durch den jeweiligen der Hops direkt erreichbar sind, und die Verbindungsstrecken zu diesen Netzwerkelementen umfasst; und
mindestens einen Prozessor (34, 44, 54) mit Zugriff (320) auf den Speicher, wobei der Prozessor so ausgelegt ist, dass er die Leitwegtabelle basierend auf den empfangenen topologischen Informationen modifiziert (330), wobei der Prozessor ferner so ausgelegt ist, dass er die Leitwegtabelle durch Löschen eines Tabelleneintrags für den jeweiligen Hop modifiziert, wenn die empfangenen topologischen Informationen angeben, dass der jeweilige Hop keine direkte Verbindungsstrecke zum Nachrichtenziel aufweist.

2. Netzwerkelement nach Anspruch 1, wobei
der Prozessor zum Steuern von Nachrichtenleitweglenkung (340) auf der Basis der modifizierten Leitwegtabelle ausgelegt ist.

3. Netzwerkelement nach Anspruch 2, wobei
der Prozessor zum Steuern von Nachrichtenleitweglenkung unter Berücksichtigung einer oder mehrerer der folgenden topologischen Informationselemente ausgelegt ist:
- Identitäten eines oder mehrerer Nachrichtenziele, die vom jeweiligen Hop direkt erreichbar sind;
- Fähigkeiten eines oder mehrerer Nachrichtenziele, die vom jeweiligen Hop direkt erreichbar sind;
- Übertragungsfähigkeiten hinsichtlich eines oder mehrerer Nachrichtenziele, die vom jeweiligen Hop direkt erreichbar sind; und
- Überlastbedingungen eines oder mehrerer Nachrichtenziele, die vom jeweiligen Hop direkt erreichbar sind.

4. Netzwerkelement nach einem der vorhergehenden Ansprüche, wobei:
- die topologischen Informationen in einem dedizierten Datenfeld einer regulären Nachricht des Nachrichtenübertragungsprotokolls enthalten sind; und/oder
- das Nachrichtenübertragungsprotokoll ein Nachrichtenübertragungsschema auf der Basis von Anforderung/Antwort implementiert; und/oder
- das Nachrichtenübertragungsprotokoll eines von dem Radius-Protokoll und dem Diameter-Protokoll ist: und/oder
- das Netzwerkelement gemäß dem Nachrichtenübertragungsprotokoll die Rolle eines von einem Agenten (40), einem Client (30) und einem Server (50) übernimmt.

5. Verfahren zum Betreiben eines Netzwerkelements (30, 40, 50), das zum Implementieren eines Nachrichtenübertragungsprotokolls der Anwendungsschicht ausgelegt ist, das hopweise Leitweglenkung basierend auf einer Leitwegtabelle verwendet, die einen oder mehrere Tabelleneinträge umfasst, wobei jeder Tabelleneintrag einen Hop, der vom Netzwerkelement unterstützt wird, mit einem Nachrichtenziel (20, 50) assoziiert, das potenziell über diesen Hop erreichbar ist, wobei i) der unterstützte Hop eines von einer Verbindungsstrecke und einem Leitweg zu einem Partner des Netzwerkelements aufweist, und ii) potenziell über diesen Hop erreichbar bedeutet, dass das Netzwerkelement keine positive Kenntnis über einen Verbindungsstreckenzustand zwischen diesem Hop und dem Nachrichtenziel hat, und wobei die Leitwegtabelle Tabelleneinträge in der Annahme umfasst, dass das Nachrichtenziel über jeden der nächsten Hops des Netzwerkelements erreicht werden kann; wobei das Verfahren umfasst:
Empfangen (310) von topologischen Informationen, die eine lokale logische Topografie eines jeweiligen der Hops in der Leitwegtabelle anzeigen, wobei die lokale logische Topografie andere Netzwerkelemente, die durch den jeweiligen der Hops direkt erreichbar sind, und die Verbindungsstrecken zu diesen Netzwerkelementen umfasst; und
Modifizieren (330) der Leitwegtabelle basierend auf den empfangenen topologischen Informationen, wobei der Prozessor ferner so ausgelegt ist, dass er die Leitwegtabelle durch Löschen eines Tabelleneintrags für den jeweiligen Hop modifiziert, wenn die empfangenen topologischen Informationen angeben, dass der jeweilige Hop keine direkte Verbindungsstrecke zum Nachrichtenziel aufweist.

6. Computerprogrammprodukt, umfassend Programmcodeabschnitte zum Ausführen der Schritte nach Anspruch 5, wenn das Computerprogrammprodukt auf einer oder mehreren Computervorrichtungen ausgeführt wird.

7. Computerlesbares Aufzeichnungsmedium, welches das Computerprogrammprodukt nach Anspruch 6 speichert.

## Revendications

1. Elément de réseau (30, 40, 50) configuré pour mettre en oeuvre un protocole de messagerie de couche d'application qui utilise un routage saut par saut, l'élément de réseau comprenant :
une mémoire (36, 46, 56) dans laquelle une table de routage est mémorisée, la table de routage incluant une ou plusieurs entrées de table, chaque entrée de table associant un saut pris en charge par l'élément de réseau à une destination de message (20, 50) pouvant être atteinte potentiellement par l'intermédiaire de ce saut, dans lequel i) le saut pris en charge a l'un d'une liaison et d'un itinéraire jusqu'à un pair de l'élément de réseau, et ii) pouvant être atteinte potentiellement par l'intermédiaire de ce saut suivant signifie que l'élément de réseau n'a pas de connaissance positive d'un état de liaison entre ce saut et la destination de message, et dans lequel la table de routage comprend des entrées de table en supposant que la destination de message peut être atteinte par l'intermédiaire de chacun des sauts suivants de l'élément de réseau ;
une interface (32, 42, 52) configurée pour la réception (310) d'informations topologiques indicatives d'une topographie logique locale de l'un particulier des sauts dans la table de routage, dans lequel la topographie logique locale comprend d'autres éléments de réseau pouvant être directement atteints par l'un particulier des sauts et les liaisons à ces éléments de réseau ; et
au moins un processeur (34, 44, 54) ayant accès (320) à la mémoire, le processeur étant configuré pour la modification (330) de la table de routage sur la base des informations topologiques reçues, dans lequel le processeur est en outre configuré pour la modification de la table de routage par la suppression d'une entrée de table pour le saut particulier si les informations de topologie reçues indiquent que le saut particulier n'a pas de liaison directe à la destination de message.

2. Elément de réseau selon la revendication 1, dans lequel
le processeur est configuré pour la commande d'un routage de message (340) sur la base de la table de routage modifiée.

3. Elément de réseau selon la revendication 2, dans lequel
le processeur est configuré pour la commande d'un routage de message en tenant compte d'un ou plusieurs des éléments suivants d'informations topologiques :
- des identités d'une ou plusieurs destinations de message pouvant être directement atteintes à partir du saut particulier ;
- des capacités d'une ou plusieurs destinations de message pouvant être directement atteintes à partir du saut particulier ;
- des capacités de transmission vers une ou plusieurs destinations de message pouvant être directement atteintes à partir du saut particulier ; et
- des conditions de surcharge d'une ou plusieurs destinations de message pouvant être directement atteintes à partir du saut particulier.

4. Elément de réseau selon l'une quelconque des revendications précédentes, dans lequel :
- les informations topologiques sont incluses dans un champ de données dédié d'un message normal du protocole de messagerie ; et/ou
- le protocole de messagerie met en oeuvre un schéma de messagerie à base de demande/réponse ; et/ou
- le protocole de messagerie est l'un du protocole Radius et du protocole Diameter ; et/ou
- l'élément de réseau assume le rôle de l'un d'un agent (40), d'un client (30) et d'un serveur (50) en fonction du protocole de messagerie.

5. Procédé de fonctionnement d'un élément de réseau (30, 40, 50) configuré pour mettre en oeuvre un protocole de messagerie de couche d'application qui utilise un routage saut par saut sur la base d'une table de routage incluant une ou plusieurs entrées de table, chaque entrée de table associant un saut pris en charge par l'élément de réseau à une destination de message (20, 50) pouvant être atteinte potentiellement par l'intermédiaire de ce saut, dans lequel i) le saut pris en charge a l'un d'une liaison et d'un itinéraire jusqu'à un pair de l'élément de réseau, et ii) pouvant être atteinte potentiellement par l'intermédiaire de ce saut suivant signifie que l'élément de réseau n'a pas de connaissance positive d'un état de liaison entre ce saut et la destination de message, et dans lequel la table de routage comprend des entrées de table en supposant que la destination de message peut être atteinte par l'intermédiaire de chacun des sauts suivants de l'élément de réseau, le procédé comprenant :
la réception (310) d'informations topologiques indicatives d'une topographie logique locale de l'un particulier des sauts dans la table de routage, dans lequel la topographie logique locale comprend d'autres éléments de réseau pouvant être directement atteints par l'un particulier des sauts et les liaisons à ces éléments de réseau ; et
la modification (330) de la table de routage sur la base des informations topologiques reçues, dans lequel le processeur est en outre configuré pour la modification de la table de routage par la suppression d'une entrée de table pour le saut particulier si les informations de topologie reçues indiquent que le saut particulier n'a pas de liaison directe à la destination de message.

6. Produit de programme informatique comprenant des portions de code de programme pour effectuer les étapes de la revendication 5 lorsque le produit de programme informatique est exécuté sur un ou plusieurs dispositifs informatiques.

7. Support d'enregistrement lisible par ordinateur mémorisant le produit de programme informatique de la revendication 6.
